# EUROPEAN PATENT APPLICATION

(11) **EP 1 370 101 A1**
(43) Date of publication of application: **10.12.2003**
(21) Application number: 02012216.4
(22) Date of filing: 04.06.2002
(51) Int. Cl.: H04Q 7/38

(54) **Method for handling multiple connections at a terminal**

(71) Applicant: Telefonaktiebolaget L M Ericsson (Publ), 126 25 Stockholm (SE)
(72) Inventor: Hartung, Frank, 52134 Herzogenrath (DE)
(74) Representative: Mohsler, Gabriele

(57) **Abstract**

The invention relates to a method for handling multiple connections at a terminal that avoids assigning a high quality of service to a connection, the user does not pay attention to. The quality of service of a first connection that is demanding the attention is reduced after a second connection is set up. After the call release the quality of service of the first connection can be enhanced again. Different criteria for the decision to diminish the quality of service and different methods to determine a parameter for the reduced quality of service are described.

## Description

### Field of invention

The invention relates to a method for handling multiple connections at a terminal, a corresponding terminal and a corresponding communication system.

### Description of prior art

The evolution of telecommunication networks is undergoing a change from second to third generation networks. Among the characteristics of terminals for a third generation network is the possibility of setting up connections of different types and the possibility of setting up more than one connection simultaneously. Examples for the types of connections are voice call connections and multimedia connections such as video connections or audio connections or multimedia connections for playing games.

The quality of service of a connection can be described by a set of parameters e.g. the bandwidth of the connection, the maximum value, the minimum value, the average value or the variation of the rate of transmitted packets, the fraction of lost packets, the fraction of erroneously received packets, or the delay of packets of the connection. In the context of this application the term bandwidth shall be used in the sense of the amount of transmitted bits during a time interval.

The desired quality of service for the different connections is either predefined for the type of connection, or if not, it can be configured by the user of the terminal for a type of connection in a setting of the terminal or it can be negotiated between the terminal and the opposite system. For example a server transmitting a multimedia stream can negotiate the bandwidth of the multimedia stream with the terminal receiving the multimedia stream according to the capacity of the network that is intermediate between the terminal and the server.

In a third generation network some types of connections have a high demand on the quality of service of the connection, especially on the bandwidth of the connection. These types are e.g. multimedia connections such as video connections or high quality audio connections. High demands on the quality of service are often related to high transmission costs. E.g. in a telecommunication network a high bandwidth of the transmitted data is related to high demands on the radio resources that implicate high transmission costs.

Many types of connections are related to a transmission of audio or video data to the terminal. In general the quality of service of the connection is related to the quality of the audio or video data that is perceived by the user, e.g. the temporal or spatial resolution of the video data, the physical bandwidth of the audio data, the signal to noise ratio of the video or the audio data or the absence of coding artefacts of the video or the audio data. As the user often focuses her attention to only one of the connections at a time, it is sensible to provide a high quality of service only for this one connection.

According to the state of the art the user can either release or maintain a first connection she does not want to pay attention to when a second connection she wants to pay attention to is set up. If the user wants to release a connection, she has to set up a dialogue with her terminal. As the setting up of the second connection demands the attention of the user, she will probably not pay her attention to starting dialogues related to another connection and the user does not release the first connection. Furthermore the user may not want to release the first connection as she intends to pay her attention to the first connection again after the second connection will be released.

Thus the quality of service of the first connection that the user will likely not pay attention to will remain unchanged. Leaving the quality of service unchanged is disadvantageous as network resources are used unnecessarily and transmission costs arise unnecessarily.

Therefore it is object of the invention to overcome the above disadvantages and to provide a method for handling multiple connections at a terminal that avoids assigning a high quality of service to a connection that the user is not likely to pay attention to.

### Summary of the invention

This object is achieved by the method of the claim 1 and the terminal of claim 15. It is an advantage of the proposed method that the decision to diminish the quality of service does not depend on the initiative of the user, whose attention will be occupied by the procedure of sending or receiving the connection request for the second connection.

Further advantageous is the diminution of the quality of service of the first connection in the server. This reduces transmission costs in the network.

Advantageous embodiments are described in dependent claims.

Further advantageous is to send an indication of the desired value of the diminished quality of service not only to the server, but also to a core network node according to claims 2 and 16, wherein the core network node is intermediate between the terminal and the server. This enables to reduce the quality of service related to the bearer according to the received indication of the diminished quality of service.

Further advantageous is an implementation wherein the first connection is a connection for receiving a multimedia stream according to claim 3. Connections for receiving multimedia streams have high demands on the quality of service of the connection, and the costs that can be saved when the quality of service is reduced are high.

Further advantageous is a decision to diminish the quality of service that depends on an input of the user according to claims 4 and 17. By this the user can decide on the quality of the first connection that she wants to perceive and she can influence the costs that are related to the first connection.

Further advantageous is the determination of the first desired value of the parameter of the quality of service according to an input of the user according to claims 5 and 18. By this the user can determine the quality of the first active connection that she wants to perceive and she can influence the costs that are related to the connection.

Further advantageous is the enhancement of the quality of service of the first connection, according to claims 6 and 19. By this the quality of the first connection that is perceived by the user can be enhanced again.

Further advantageous is to send an indication of the desired value of the enhanced quality of service not only to the server but also to a core network node that is intermediate between the terminal and the server according to claims 7 and 20.

This enables to enhance the quality of service related to the bearer according to the received indication of the enhanced quality of service. Thus the quality service of the first connection can be enhanced again.

Further advantageous is the enhancement of the quality of service of the first connection to a level that was used before diminishing it according to claims 8 and 21. This is advantageous as the quality of service of the first connection can be restored to a value that was recognized as an appropriate value for the quality of service by the user.

Further advantageous is a decision to enhance the quality of service of the first connection that depends on an input of the user according to claims 9 and 22. This has the advantage that the user can decide on the quality of the first connection that she wants to perceive and she can influence the costs that are related to the first connection.

Further advantageous is a decision to enhance the quality of service of the first connection that is performed after the second connection is released according to claims 10 and 23. Enhancing the quality of service of the first connection again after the second connection has been released is advantageous, as the user will likely pay her attention to the first connection again if the second connection has been released.

Further advantageous is a decision to diminish the quality of service of the first connection, wherein the decision depends on the type of the second connection according to claims 11 and 24. This has several advantages: A sum of parameter values describing the quality of service of the first and the second connection can be kept below a maximum value if connections of the different types have different demands on the quality of service and the decision to reduce the quality of service of the first connection depends on a parameter value of the quality of service, wherein the parameter value is related to the type of the second connection. Furthermore different types of connections may demand the attention of the user to a different degree. If the user wants to share her attention between the different connections, she may accept a reduction of the quality of the first connection sooner if she will pay more attention to the second connection and, as a result, less attention to the first connection.

Further advantageous is the determination of the first desired value according to the type of the second connection according claims 12 and 25. This has several advantages: A sum of parameter values describing the quality of service of the first and the second connection can be kept below a maximum value if connections of the different types have different demands on the quality of service and the desired value of the quality of service of the first connection depends on a parameter value of the quality of service, wherein the parameter value is related to the type of the second connection.

Furthermore different types of connections may demand the attention of the user to a different degree. If the user wants to share her attention between the different connections, she may accept a lower quality of the first connection if she will pay more attention to the second connection and, as a result, less attention to the first connection.

Further advantageous is that a parameter describes the bandwidth for the first connection according to claim 13. This is advantageous if the bandwidth is reduced according to the received indication of the desired value of the bandwidth. A reduction of the bandwidth of the transmitted data relates to a reduced consumption of radio resources and lower transmission costs, especially if the terminal T is a terminal in a mobile telecommunication network e.g. a GSM network, a GPRS network or a UMTS network.

Further advantageous is a method wherein a parameter that describes the quality of service comprises a value for at least one of the maximum value, the minimum value, the average value or the variation of the rate of transmitted packets, the fraction of lost packets, the fraction of erroneously received packets, or the delay of packets according to claim 14. This is advantageous if the quality service is reduced according to the received indication of the desired value of the quality of service as a reduction of the transmission costs is related to the reduction of the quality of service that is described by these parameters.

### Brief description of the drawings

The following figures show:
- Fig. 1: depicts a terminal for handling multiple connections and
- Fig. 2: depicts a communication system comprising a terminal for handling multiple connections, a core network node, and a server.

### Detailed description of embodiments

In the following the invention is described in more detail by means of embodiments and figures. Equal reference signs indicate equal elements.

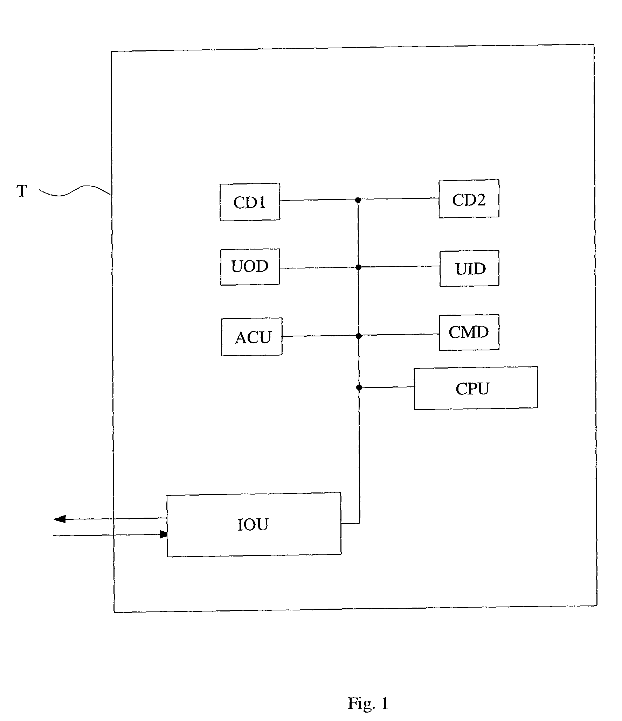

Figure 1 depicts the architecture of a terminal T according to the invention. The architecture shows functional units of the terminal T that can be implemented by a hardware or a software module or a combination of both. Connections between the functional units are depicted as lines.

The terminal T can be for example a mobile station for a UMTS- or a GPRS- network. The terminal T comprises a central processing unit CPU, a first communication device CD1, a second communication device CD2, a user input device UID, a user output device UOD, an application control unit ACU, a connection monitoring device CMD and an input/output unit IOU. The central processing unit CPU, the first communication device CD1, the second communication device CD2, the user input device UID, the user output device UOD, the application control unit ACU, the connection monitoring device CMD and the input/ output unit IOU are connected for information exchange.

The input/ output unit IOU is adapted to connect the terminal T to a communication network, e.g. a GPRS- or a UMTS- network. If the terminal T is a mobile station for a mobile telecommunication network, the input/ output unit IOU can connect the terminal to a communication network via a radio interface.

The first communication device CD1 is connectable to a server in the communication network via a first connection. The first connection can be for example a connection for receiving a video stream, a multimedia stream, or an audio stream. The first communication device CD1 comprises an output device, e.g. a loudspeaker or a display as a hardware unit. If the terminal is a UMTS terminal, the communication device CD1 can comprise an audio player, a video player or a multimedia player as software unit.

The second communication device CD2 is adapted to set up a second connection, e.g. a second connection for receiving a video stream or a multimedia stream or a voice call.

The connection monitoring device CMD comprises a storage for a first status variable and a storage for a second status variable. The first status variable indicates an incoming or outgoing connection request for the second connection. The second status variable indicates a call release of the second connection. The storages for the first and the second status variable can be two different storages, one storage can store the first and the second status variable, or one storage can store one status variable that indicates both an incoming or outgoing connection request for the second connection and a call release of the second connection.

The central processing unit CPU is adapted to process information, to control and to coordinate the units it is connected to.

The task of the application control unit ACU is to decide to diminish the quality of service for the first connection according to the value of the first status variable. In an embodiment of the invention it is also a task of the application control unit ACU to decide to enhance the quality of service for the first connection according to the value of the second status variable. The task of the user input device UID is to enable inputs of the user. For this purpose, the user input device can for example comprise a microphone, a keypad, or buttons. The task of the user output device UOD is to present information to the user of the terminal, for example during a dialogue with the user. Therefore the user output device UOD can comprise or control a loudspeaker or a display.

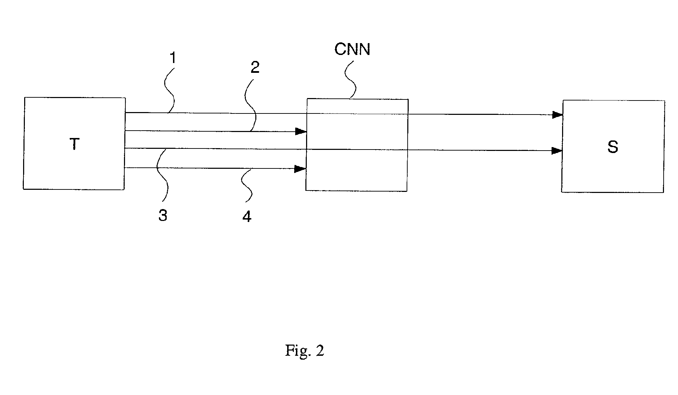

Figure 2 depicts the architecture of a communication system according to the invention. The communication system comprises a terminal T for receiving multimedia streams and a server S for transmitting multimedia streams. The server S can be for example a multimedia server, a proxy server, or a media gateway. A core network node CNN can be intermediate between the terminal T and the server S. Two messages from the terminal T to the server S and two messages from the terminal T to the core network node CNN are depicted as arrows.

The terminal T sets up a first connection to the server S for a service, that demands the attention of the user of the terminal T, e.g. a packet switched connection for receiving a multimedia stream, for example a video stream or an audio stream, or a packet switched multimedia connection for displaying scenes or providing haptic feedback of virtual reality animations e.g. as an output of an interactive game. Alternatively the first connection can be a circuit switched connection.

The first connection can be a connection according to a layered architecture with a physical layer, a transport layer, a session layer, and an application layer. If the terminal T is a mobile station for a UMTS- or a GPRS- network that is connected to the server S via a core network node CNN, a PDP (packet data protocol) context can be established between the core network node CNN and the terminal T. PDP contexts are described in the 3G TS 24.008 V5.3.0 of the 3^{rd} Generation Partnership Project. The PDP context contains a description of the quality of service of the bearer that is established between the core network node CNN and the terminal T for transmitting payload. Among the parameters of the quality of service described in the PDP context is the maximum bit rate and the guaranteed bit rate for downlink from the core network node CNN to the terminal T, relating to the maximum and the minimum bandwidth of the bearer for downlink.

In the case of a connection between the server S and the terminal T for receiving a multimedia stream the IP (internet protocol) can be used for signaling on the transport layer, the TCP (transport control protocol) can be used for signaling on the on the session layer, and the RTSP (Real Time Streaming Protocol) according to the request for comments 2326 of the IETF (Internet Engineering Task Force) from April 1998 can be used for signaling on the application layer. For the transmitted data the IP (internet protocol) can be used on the transport layer and the RTP (real time protocol) above the UDP (User Datagram Protocol) can be used on the session layer. In this case during the setting up of the first connection the terminal sends a RTSP DESCRIBE message to the server in order to request a description of the different streams that are available at the server. The server S responds with the description of the different multimedia streams that are available by the server S. For the description of said streams the SDP (Session Description Protocol) according to the request for comments 2327 of the IETF (Internet Engineering Task Force) from April 1998 can be used. In the description of the different multimedia streams that are available by the server, for each of the available multimedia streams an identification of the multimedia stream is contained. In the depicted embodiment the selected parameter for describing the quality of service of the first connection is the bandwidth of a multimedia stream, which could be replaced by any other parameter describing the quality of service of the first connection. The terminal T selects a set of multimedia streams with different bandwidth, wherein the different streams are related to the same content. For each of the multimedia streams of the selected set of multimedia streams the terminal T sends a RTSP SETUP message containing an identification of the multimedia stream. Among the set of multimedia streams one multimedia stream with a dedicated bandwidth that should be received is chosen. The RTSP SETUP message can be sent only for the chosen multimedia stream. The terminal T sends a RTSP PLAY message containing an identification of the chosen multimedia stream to the server. The RTSP PLAY message contains a network address of the server S, from which the server S is identifiable within the telecommunication network. The application control unit ACU or the communication device CD1 can send the RTSP SETUP messages and the RTSP PLAY message. If the communication device CD1 sends the RTSP PLAY message, the application control unit ACU stores a list of identifications of the different streams of the set of multimedia streams. If the application control unit ACU sends the RTSP PLAY message, the first communication device CD1 sends the network address of the server S to the application control unit ACU before the application control unit ACU sends the RTSP PLAY message.

The server S starts transmitting the multimedia stream that is related to the received indication to the terminal T. The terminal T receives the multimedia stream in the first communication device CD1 that displays the multimedia stream to the user. The terminal T sends or receives a connection request for a second connection of the second communication device CD2. This connection request is indicated by the first status variable of the connection monitoring device CMD. The connection monitoring device CMD sends the value of the first status variable to the application control unit ACU. The application control unit ACU decides to diminish the bandwidth of the first connection according to the value of the first status variable and determines a first desired value of the diminished bandwidth for the first connection. The application control unit ACU can additionally determine a second desired value of the diminished bandwidth for the connection between the core network node CNN and the terminal T according to the value of the first status variable. Diminishing the quality of service of the connection between the core network node CNN and the terminal T is especially useful, if a bearer with a fixed guaranteed quality of service is set up for transmitting payload between the core network node CNN an the terminal T. By this the resources that relate to the fixed bearer can be reduced. The parameter describing the diminished quality can be e.g. the guaranteed bit rate for downlink or the maximum bit rate for downlink from the core network CNN to terminal T, relating to the maximum and the minimum bandwidth of the bearer between the core network node CNN and the terminal T the for downlink. Preferably, the second desired value of the bandwidth of the connection between the core network node and the terminal T is higher than the first desired value of the bandwidth of the first connection between the server S and the terminal T to avoid a buffer overflow at the core network node CNN. In order to provide a possibility to return to the actual value of the bandwidth. the actual value of the bandwidth can be determined by the application control unit ACU or the first communication device CD1 before the decision to reduce the bandwidth is performed and the actual value of the bandwidth can be stored by the application control unit ACU or the first communication device CD1.

Alternatively the application control unit ACU can decide to diminish the quality of service by adapting the maximum value, the minimum value, the average value or the variation of the bandwidth, or, if the first connection is a packet switched connection, the maximum value, the minimum value, the average value or the variation of the rate of transmitted packets, the fraction of lost packets, the fraction of erroneously received packets, or the delay of packets, or the maximum size of a packet, the reliability of the first connection, the traffic handling priority, the traffic class, or the delivery order.

The first or the second desired value of the bandwidth or the decision to diminish the bandwidth can depend on an input of the user to the user input device UID. The input can be an input in an interactive dialogue that is performed after the connection request for the second connection is indicated by the first status variable. Alternatively the input can be made in advance and a flag indicating whether the bandwidth shall be diminished or the first desired value can be stored as a setting of the terminal T. In order to perform a dialog with the user, information can be presented to the user via the user output device UOD.

The first or the second desired value of the bandwidth or the decision to diminish the bandwidth can depend on the type of the second connection if the terminal is capable of handling different types of connections. To this end the connection monitoring device CMD can determine the type of the second connection, store a connection type variable indicating the type of the second connection, and send the value of the connection type variable indicating the type of the second connection to the application control unit ACU. The application control unit ACU can decide to diminish the bandwidth of the first connection according to the value of the connection type variable or the application control unit ACU can determine the first desired value of the diminished bandwidth according to the value of the connection type variable. E.g. the application control unit ACU can decide to diminish the bandwidth only, if the demanded bandwidth related to the type of the second connection is above a certain value. A lower desired value of the bandwidth of the first connection can be chosen for a higher demanded bandwidth that is related to the type of the second connection.

The application control unit ACU sends an indication of the first desired value of the bandwidth towards the server S for diminishing the bandwidth of the first connection or the application control unit ACU triggers the first communication device CD1 to send the indication and the first communication device CD sends the indication of the first desired value of the bandwidth towards the server for diminishing the bandwidth. The indication is sent in a message 1. If the RTSP protocol is used for the exchange of information between the terminal and the server and the SDP protocol is used for the description of the multimedia streams, the application control unit ACU can select a lower bandwidth than the bandwidth of the received multimedia stream. The application control unit ACU or the first communication device CD1 unit sends a first RTSP PAUSE message containing an identification of the received multimedia stream to the server S.

The first communication device CD1 determines the time the multimedia stream has been played until the first RTSP PAUSE message was sent. If the desired value of the bandwidth is not zero the application control unit ACU or the first communication device CD1 sends a RTSP PLAY message 1 containing an identification of a multimedia stream with the selected lower bandwidth to the server S. The RTSP PLAY message 1 contains an indication of the time the multimedia stream has been played. If a RTSP DESCRIBE message has not yet been sent for the multimedia stream to be received, a RTSP DESCRIBE message containing an identification of the multimedia stream with the selected lower bandwidth has to be sent to the server S before sending the RTSP PLAY message 1.

If the desired value of the bandwidth is zero, only the first RTSP PAUSE message has to be sent to the server S as message 1.

The server S stops transmitting the multimedia stream with the higher bandwidth and, if a RTSP PLAY message has been sent to the server S, starts transmitting the multimedia stream with the selected lower bandwidth. The second connection is set up and the attention of the user is occupied by the second connection.

The application control unit ACU or the first communication device CD1 sends an indication of the second desired value towards the core network node CNN in a message 2 for diminishing the quality of service of the first connection. If a PDP context is established between the terminal T and the core network node CNN, the message 2 can be a MODIFY PDP CONTEXT REQUEST message containing a description of requested new quality of service. The core network node CNN changes the bearer to a new bearer with a diminished quality of service that was described in the MODIFY PDP CONTEXT REQUEST message.

If the desired value of the bandwidth of the connection for transmitting payload between the core network node CNN and the terminal T is zero, the PDP context between the terminal and the core network node CNN can be deactivated. Then the message 2 can be a DEACTIVATE PDP CONTEXT REQUEST message.

The bandwidth of the first connection can be enhanced again, after the second connection is released, or if the user decides to pay attention to the first connection again. In the first case the second status variable indicates a call release of the second connection and the connection monitoring device CMD sends the value of the second status variable to the application control unit ACU. The application control unit ACU decides to enhance the bandwidth of the first connection and determines a third desired value of the enhanced bandwidth. The decision to enhance the bandwidth again can depend on an input of the user to the user input device UID. The third desired value can be determined by the application control unit ACU according to the stored value of the bandwidth that had been determined before the bandwidth was diminished.

Alternatively the application control unit ACU can decide to enhance the quality of service of the first connection by adapting the maximum value, the minimum value, the average value or the variation of the rate of transmitted packets, the fraction of lost packets, the fraction of erroneously received packets, or the delay of packets if the first connection is a packet switched connection.

The application control unit ACU can additionally determine a fourth desired value of the enhanced bandwidth for the connection between the core network node CNN and the terminal T. Preferably, the fourth desired value of the bandwidth of the connection between the core network node CNN and the terminal T is higher than the third desired value of the bandwidth of the first connection between the server S and the terminal T to avoid a buffer overflow at the core network node CNN.

The application control unit ACU sends an indication of the third desired value towards the server for enhancing the bandwidth or the application control unit ACU triggers the first communication device CD1 to send the indication and the first communication device CD1 sends the indication of the third desired value towards the server S for enhancing the bandwidth. The indication is sent in a message 3.

If the RTSP protocol is used for exchanging information between the terminal and the server and the SDP protocol is used for the description of the multimedia streams, the application control unit ACU can select a higher bandwidth e.g. the bandwidth of the multimedia stream, the terminal had received before the decision to reduce the bandwidth of the first connection was performed.

The application control unit ACU or the first communication device CD1 sends a second RTSP PAUSE message containing an identification of the received multimedia stream with the lower bandwidth to the server S. The first communication device CD1 determines the time the multimedia stream has been played until the second RTSP PAUSE message was sent. The application control unit ACU or the first communication device CD1 sends a RTSP PLAY message 3 containing an identification of a multimedia stream with the selected higher bandwidth to the server S. The RTSP PLAY message 3 contains an indication of the time the multimedia stream has been played. If a RTSP DESCRIBE message has not yet been sent for the multimedia stream to be received, a RTSP DESCRIBE message containing an identification of the multimedia stream with the selected higher bandwidth has to be sent to the server S before sending the RTSP PLAY message 3.

The server S stops transmitting the multimedia stream with the lower bandwidth and starts transmitting the multimedia stream with the higher bandwidth. If the bandwidth has been reduced to zero, only the RTSP PLAY message 3 has to be sent to the server S and the server S starts transmitting a multimedia stream again.

An indication of the fourth desired value can be sent to the core network node CNN in a message 4 for enhancing the quality of service of the connection between the core network node CNN and the terminal T, preferably by the application control unit ACU or the first communication device CD1. The parameter describing the enhanced quality of service can be e.g. the guaranteed bit rate for downlink or the maximum bit rate for downlink from the core network CNN to terminal T, relating to the maximum and the minimum bandwidth of the bearer between the for downlink.

If a PDP context is established between the terminal T and the core network node CNN, the message 4 can be a MODIFY PDP CONTEXT REQUEST message containing a description of requested new quality of service. The core network node CNN changes the bearer to a new bearer with an enhanced quality of service that was described in the MODIFY PDP CONTEXT REQUEST message 4.

If the PDP context between the core network node CNN and the terminal T had been deactivated, a new PDP context between the core network node CNN and the terminal T can be activated. Then the message 4 can be an ACTIVATE PDP CONTEXT REQUEST message containing a description of the requested new quality of service.

## Claims

1. Method for handling multiple connections at a terminal (T) with a first connection to a server (S), wherein the first connection is demanding the attention of the user of the terminal (T) and the following steps are performed by the terminal (T):
- sending or receiving a connection request for a second connection,
- deciding to diminish the quality of service of the first connection.
- determining a first desired value of a parameter describing the diminished quality of service for the first connection,
- sending (1) an indication of the first desired value of the parameter towards the server (S) for diminishing the quality of service of the first connection.

2. Method according to claim 1, wherein a core network node (CNN) is intermediate between the terminal (T) and the server (S), and the following steps are performed by the terminal (T):
- determining a second desired value of a parameter describing the diminished quality of service for the connection between the core network node (CNN) and the terminal (T),
- sending (2) an indication of the second desired value towards the core network node (CNN) for diminishing the quality of service of the connection between the core network node (CNN) and the terminal (T).

3. Method according to claim 1 or 2, wherein the first connection is a connection for receiving a multimedia stream.

4. Method according to any of the claims 1 to 3, wherein the decision to diminish the quality of service depends on an input of the user of the terminal (T).

5. Method according to any of the claims 1 to 4, wherein the first desired value is determined according to an input of the user of the terminal (T).

6. Method according to any of the claims 1 to 5, wherein the following steps are performed by the terminal (T):
- deciding to enhance the quality of service of the first connection,
- determining a third desired value of a parameter describing the enhanced quality of service for the first connection,
- sending (3) an indication of the third desired value towards the server for enhancing the quality of service of the first connection.

7. Method according claim 6, wherein a core network node (CNN) is intermediate between the terminal (T) and the server (S), wherein the following steps are performed by the terminal (T):
- determining a fourth desired value of a parameter describing the enhanced quality of service for the connection between the core network node (CNN) and the terminal (T),
- sending (4) an indication of the fourth desired value towards the core network node (CNN) for enhancing the quality of service of the connection between the core network node (CNN) and the terminal (T).

8. Method according claim 6 or 7, wherein the actual value of a parameter describing the quality of service of the first connection is determined before deciding to diminish the quality of service, the actual value of the parameter is stored by the terminal (T), and wherein the third desired value is determined according to the stored actual value.

9. Method according to any of the claims 6 to 8, wherein the decision to enhance the quality of service of the first connection depends on an input of the user of the terminal (T).

10. Method according to any of the claims 6 to 9, wherein the second connection is released before deciding to enhance the quality of service of the first connection.

11. Method according to any of the claims 1 to 10, wherein the terminal (T) is capable of handling different types of connections, the terminal (T) determines the type of the second connection, and wherein the decision to diminish the quality of service of the first connection depends on the type of the second connection.

12. Method according to any of the claims 1 to 11, wherein the terminal (T) is capable of handling different types of connections, the terminal (T) determines the type of the second connection, and wherein the first desired value is determined according to the type of the second connection.

13. Method according to any of the claims 1 to 12, wherein a parameter describes at least one of the maximum value, the minimum value, the average value, or the variation of the bandwidth for the first connection.

14. Method according to any of the claims 1 to 13, wherein the first connection is a packet switched connection and a parameter describes at least one of the maximum value, the minimum value, the average value or the variation of the rate of transmitted packets, the fraction of lost packets, the fraction of erroneously received packets, or the delay of packets.

15. Terminal (T) comprising:
- an input/ output unit (IOU), for connecting the terminal (T) to a communication network,
- a first communication device (CD1), that is connectable to a server (S) in the communication network via a first connection, wherein the connection is capable of demanding the attention of a user of the terminal (T),
- a second communication device (CD2) for setting up a second connection,
- a connection monitoring device (CMD) with a first status variable indicating an incoming or outgoing connection request for the second communication device (CD2),
- a central processing unit (CPU) for processing information and coordinating the units, and
- an application control unit (ACU) capable of deciding to diminish the quality of service for the first connection according to the value of the first status variable, determining a first desired value of a parameter describing the diminished quality of service for the first connection according to the value of the first status variable, wherein the application control unit (ACU) or the first communication device (CD1) is capable of sending an indication of the first desired value of the parameter towards the server (S) for diminishing the quality of service of the first connection.

16. Terminal (T) according to claim 15, wherein the application control (ACU) unit is capable of determining a second desired value of a parameter describing the diminished quality of service for a connection between a core network node (CNN) and the terminal (T) according to the value of the first status variable, the core network node (CNN) being intermediate between the terminal (T) and the server (S), and wherein the application control unit (ACU) or the first communication device (CD1 ) is capable of sending (2) an indication of the second desired value towards the core network node (CNN), for diminishing the quality of service of the connection between the core network node (CNN) and the terminal.

17. Terminal (T) according to claim 15 or 16, comprising a user input device (UID) for inputs of the user of the terminal (T) and a user output device (UOD) for displaying information to the user, wherein the application control unit (ACU) is capable of deciding to diminish the quality of service according to an input to the user input device (UID).

18. Terminal (T) according to any of the claims 15 to 17, comprising a user input device (UID) for inputs of the user of the terminal (T), and a user output device (UOD) for displaying information to the user, wherein the application control unit (ACU) is capable of determining the first desired value according to an input to the user input device (UID).

19. Terminal (T) according to any of the claims 15 to 18, wherein the application control unit (ACU) is capable of deciding to enhance the quality of service for the connection of the first communication device to the server (S), determining a third desired value of a parameter describing the enhanced quality of service for the first connection, and wherein the application control unit (ACU) or the first communication device (CD1) is capable of sending (3) an indication of the third desired value of the parameter towards the server (S) for enhancing the quality of service of the first connection.

20. Terminal (T) according to claim 19, wherein the application control unit (ACU) is capable of determining a fourth desired value of a parameter describing the enhanced quality of service for a connection between a core network node (CNN) and the terminal (T), the core network node (CNN) being intermediate between the terminal (T) and the server (S), and wherein the application control unit (ACU) or the first communication device (CD1) is capable of sending (4) an indication of the fourth desired value of the parameter towards the core network node (CNN), for enhancing the quality of service of the connection between the core network node (CNN) and the terminal (T).

21. Terminal (T) according to claim 19 or 20, wherein the first communication device (CD1) or the application control unit (ACU) are capable of determining the actual value of a parameter describing the quality of service of the first connection and storing the actual value in a variable, and wherein the application control unit (ACU) is capable of determining the third desired value according to the value of said variable.

22. Terminal (T) according to any of the claims 19 to 21, wherein the application control unit (ACU) is capable of deciding to enhance the quality of service according to an input to a user input device (UID).

23. Terminal (T) according to any of the claims 15 to 22, wherein the connection monitoring device (CMD) is adapted to store a second status variable indicating that the second connection has been released and wherein the application control unit (ACU) is capable of deciding to enhance the quality of service according to the value of the second status variable.

24. Terminal (T) according to any of the claims 15 to 23, capable of handling different types of connections, wherein the connection monitoring device (CMD) is adapted to determine the type of the second connection and to store a first connection type variable indicating the type of the second connection, and wherein the application control unit (ACU) is capable of deciding to diminish the quality of service of the first connection according to the value of the first connection type variable.

25. Terminal (T) according to any of the claims 15 to 24, capable of handling different types of connections, wherein the connection monitoring device (CMD) is adapted to determine the type of the second connection and to store a second connection type variable indicating the type of the second connection, and wherein the application control unit (ACU) is capable of determining the first desired value according to the value of the second connection type variable.
